# EUROPEAN PATENT APPLICATION

(11) **EP 3 648 049 A1**
(43) Date of publication of application: **06.05.2020**
(21) Application number: 19202693.8
(22) Date of filing: 11.10.2019
(51) Int. Cl.: G06Q 50/26

(54) **COMMUNICATION METHOD, COMMUNICATION PROGRAM, AND COMMUNICATION APPARATUS**

(30) Priority: 02.11.2018 JP 2018206979
(71) Applicant: FUJITSU LIMITED, Kanagawa 211-8588 (JP)
(72) Inventor: Suga, Junichi, Kanagawa, 211-8588 (JP)
(74) Representative: Hoffmann Eitle

(57) **Abstract**

A communication apparatus configured to be coupled to another apparatus via a network includes: a memory including a storage area of a distributed ledger; and a processor configured to execute a first processing when the communication apparatus is coupled with a first apparatus possessing data, the first processing including accepting, when the communication apparatus accepts metadata from the first apparatus, a registration request for the metadata including a transfer attribute for transferring setting authority for a disclosure policy for the data to a second apparatus, execute a second processing when the communication apparatus is coupled with a second communication apparatus, the second processing including accepting an acquisition request for the metadata that is registered from the second apparatus, and accepting the disclosure policy setting for the metadata, execute a third processing when the communication apparatus is coupled with a third communication apparatus using the data, and execute a fourth processing.

## Description

### FIELD

The embodiments discussed herein are related to a communication method, a communication program, and a communication apparatus.

### BACKGROUND

In recent years, data exchange system in which data possessed by enterprises (organizations) is mutually exchanged and utilized and among the enterprises have been attracting attention, and new services and businesses are expected to be created by promotion of the data exchange.

As one form of the data exchange system, there is a distributed data exchange system. Unlike a centralized type in which data is managed collectively, data is distributed to and managed by each enterprise, and an enterprise that possesses data provides the data to an enterprise that uses the data, via a network.

As the data exchange system, there has been proposed a network in which data is securely distributed by using, for example, a distributed ledger by block chain technology.

### SUMMARY

### TECHNICAL PROBLEM

In the past, data targeted by a data distribution network is industrial data possessed by an enterprise, and industrial data is exchanged among enterprises. In order to disclose the industrial data, a disclosure policy indicating a disclosure destination of the industrial data is set, and in this case, the disclosure policy is set by the enterprise possessing the industrial data.

On the other hand, in recent years, data distribution of personal data, that is personal information, has been actively discussed. As with the industrial data, a disclosure policy indicating a disclosure destination of the personal data is also required to be set for the personal data.

However, when the disclosure policy for the personal data is set, similar to a case of setting the disclosure policy for the industrial data, by an enterprise possessing the personal data, and the personal data is provided, the personal data is distributed without agreement of an individual person.

For this reason, in the distribution of personal data, even when provided by the enterprise possessing the personal data, the disclosure policy for the personal data is preferably set by an individual person who is an owner of the personal data, and realization of a communication technique enabling such setting is required.

In one aspect, it is an object of the present disclosure to provide a communication method, a communication program, and a communication apparatus capable of, from an apparatus different from an apparatus possessing data, setting a disclosure policy for the data.

### SOLUTION TO PROBLEM

In order to solve the above problem, there is provided a communication method by a plurality of communication apparatuses included in a network. In the communication method, a first communication apparatus coupled with a first apparatus possessing data, when accepting metadata including attribute information of the data from the first apparatus, accepts a registration request for metadata including a transfer attribute for transferring setting authority for a disclosure policy for the data to a second apparatus, a second communication apparatus coupled with the second apparatus accepts an acquisition request for metadata that is registered from the second apparatus, and accepts disclosure policy setting for the metadata acquired by the second apparatus, a third communication apparatus coupled with a third apparatus that uses the data, accesses the data in a case where the third apparatus is set in the disclosure policy when an access request for the data is accepted from the third apparatus, and the first, second, third communication apparatuses cooperate to verify validity of, execute, and share a history of a registration transaction that is a series of registration processes in response to the registration request, an acquisition transaction that is a series of acquisition processes in response to the acquisition request, a setting transaction that is a series of setting processes in response to the disclosure policy setting, and an access transaction that is a series of access processes in response to the access request.

In order to solve the above problems, there is provided a communication program for making a computer perform similar control as in the communication method described above.

In order to solve the above problems, there is provided a communication apparatus that performs similar control as in the communication method described above.

### ADVANTAGEOUS EFFECTS OF INVENTION

According to an aspect, it is possible, from an apparatus different from an apparatus possessing data, to set a disclosure policy for the data.

According to an aspect of the embodiments, an apparatus includes

The object and advantages of the invention will be realized and attained by means of the elements and combinations particularly pointed out in the claims.

It is to be understood that both the foregoing general description and the following detailed description are exemplary and explanatory and are not restrictive of the invention.

### BRIEF DESCRIPTION OF DRAWINGS

FIG. 1 is a diagram for explaining an example of a configuration and operation of a communication apparatus.
FIG. 2 is a diagram illustrating an example of a configuration of a distributed data exchange system.
FIG. 3 is a diagram illustrating an example of a hardware configuration of a node.
FIG. 4 is a diagram illustrating an example of functional blocks of the node.
FIG. 5 is a diagram illustrating an overall operation sequence of personal data exchange.
FIG. 6 is a diagram illustrating an example of a configuration of metadata of personal data.
FIG. 7 is a diagram illustrating an example of transaction information.
FIG. 8 is a diagram illustrating an example of verification and execution of transactions.
FIG. 9 is a diagram illustrating an example of verification contents in each transaction.
FIG. 10 is a diagram illustrating an example of an operation sequence in metadata registration.
FIG. 11 is a diagram illustrating an example of an operation sequence in metadata acquisition.
FIG. 12 is a diagram illustrating an example of an operation sequence in disclosure policy setting.
FIG. 13 is a diagram illustrating an example of an operation sequence in metadata reference.
FIG. 14 is a diagram illustrating an example of an operation sequence in data access.

### DESCRIPTION OF EMBODIMENT(S)

In the past, data targeted by a data exchange platform is industrial data possessed by an enterprise, and industrial data is exchanged among enterprises. In order to disclose the industrial data, a disclosure policy indicating a disclosure destination of the industrial data is set, and in this case, the disclosure policy is set by the enterprise possessing the industrial data.

On the other hand, in recent years, data exchange of personal data, that is personal information, has been actively discussed. As with the industrial data, a disclosure policy indicating a disclosure destination of the personal data is also required to be set for the personal data.

However, when the disclosure policy for the personal data is set, similar to a case of setting the disclosure policy for the industrial data, by an enterprise possessing the personal data, and the personal data is provided, the personal data is distributed without agreement of an individual person.

For this reason, in the exchange of personal data, even when provided by the enterprise possessing the personal data, the disclosure policy for the personal data is preferably set by an individual person who is an owner of the personal data, and realization of a communication technique enabling such setting is required.

In one aspect, it is an object of the present disclosure to provide a communication method, a communication program, and a communication apparatus capable of, from an apparatus different from an apparatus possessing data, setting a disclosure policy for the data.

According to an aspect, it is possible, from an apparatus different from an apparatus possessing data, to set a disclosure policy for the data.

The present embodiments will be described below with reference to the accompanying drawings.

### [First Embodiment]

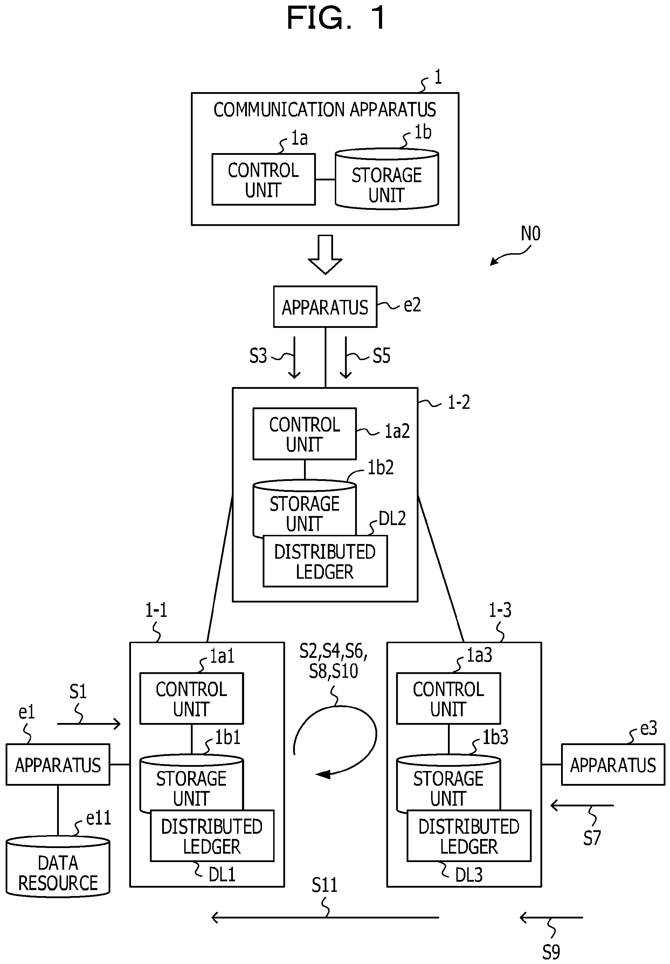

A first embodiment will be described with reference to FIG. 1. FIG. 1 is a diagram for explaining an example of a configuration and operation of a communication apparatus. A communication apparatus 1 is included in a network and includes a control unit 1a and a storage unit 1b.

The control unit 1a is coupled with another apparatus via the network to perform communication control. The storage unit 1b has a storage area of a distributed ledger by block chain, and stores various data required for the communication control.

Here, in a case where the control unit 1a is coupled with a first apparatus that possesses data (service data), and when metadata including attribute information of data is accepted from the first apparatus, the control unit 1a accepts a registration request for metadata including a transfer attribute for transferring setting authority for a disclosure policy for data to a second apparatus.

In a case of being coupled with the second apparatus, the control unit 1a accepts an acquisition request for metadata from the second apparatus, and accepts disclosure policy setting from the second apparatus.

In a case of being coupled with a third apparatus that uses the data, and the third apparatus is set in the disclosure policy when an access request for the data from the third apparatus is accepted, the control unit 1a accesses data possessed by the first apparatus.

Operation will be described by using an example illustrated in FIG. 1. A network N0 includes communication apparatuses 1-1, 1-2, and 1-3, and the apparatuses are coupled with each other. In the network N0, a platform for block chain is constructed by the communication apparatuses 1-1, 1-2, and 1-3.

The communication apparatus 1-1 includes a control unit 1a1 and a storage unit 1b1, and the communication apparatus 1-2 includes a control unit 1a2 and a storage unit 1b2. The communication apparatus 1-3 includes a control unit 1a3 and a storage unit 1b3.

The communication apparatus 1-1 is coupled with an apparatus e1, the communication apparatus 1-2 is coupled with an apparatus e2, and the communication apparatus 1-3 is coupled with an apparatus e3.

The apparatus e1 corresponds to, for example, a server of an enterprise that possesses data and provides data to another party, and the apparatus e3 corresponds to a server of an enterprise that uses data. The apparatus e2 corresponds to a user terminal of an individual person.

Operation will be described based on the example illustrated in FIG. 1.

[Step S1] The control unit 1a1 accepts metadata including attribute information of data from the apparatus e1. In this case, the control unit 1a1 accepts a registration request for metadata including a transfer attribute for transferring setting authority for a disclosure policy for data to the apparatus e2.

[Step S2] When accepting the metadata registration request, the control unit 1a1 issues a registration transaction for the metadata (set of a series of registration processes in response to the metadata registration request), and transfers to the control units 1a2 and 1a3. Each of the control units 1a1, 1a2, and 1a3 verifies validity of this registration transaction, and when validity is detected, executes the registration transaction.

The control unit 1a1 calculates a hash value of an execution history of the registration transaction, and stores the execution history and the hash value in a distributed ledger DL1 of the storage unit 1b1. The control unit 1a1 couples (chains) the execution history of the registration transaction executed this time with an execution history of a preceding transaction executed last time and stored in the distributed ledger DL1 via the hash value.

Similarly, the control unit 1a2 calculates a hash value of an execution history of the registration transaction, and stores the execution history and the hash value in a distributed ledger DL2 of the storage unit 1b2. The control unit 1a2 chains the execution history of the registration transaction executed this time to an execution history of a previous transaction stored in the distributed ledger DL2 and executed last time via the hash value.

The control unit 1a3 calculates a hash value of an execution history of the registration transaction, and stores the execution history and the hash value in a distributed ledger DL3 of the storage unit 1b3. The control unit 1a3 chains the execution history of the registration transaction executed this time to an execution history of a previous transaction stored in the distributed ledger DL3 and executed last time via the hash value.

In this manner, in the communication apparatuses 1-1, 1-2, and 1-3, distributed ledger management by block chain is performed in which the registration transaction for the metadata is verified and executed, and the execution histories are stored in the respective communication apparatuses.

[Step S3] The control unit 1a2 accepts an acquisition request for metadata from the apparatus e2.

[Step S4] When accepting the acquisition request for the metadata, the control unit 1a2 issues an acquisition transaction for the metadata (set of a series of acquisition processes in response to the acquisition request for the metadata), and transfers to the control units 1a1 and 1a3. Each of the control units 1a1, 1a2, and 1a3 verifies this acquisition transaction, and when validity is detected, executes the acquisition transaction.

The control unit 1a2 calculates a hash value of an execution history of the acquisition transaction, and stores the execution history and the hash value in the distributed ledger DL2 of the storage unit 1b2. The control unit 1a2 chains the execution history of the acquisition transaction executed this time to an execution history of a previous transaction stored in the distributed ledger DL2 and executed last time via the hash value.

Similarly, the control unit 1a1 calculates a hash value of an execution history of the acquisition transaction, and stores the execution history and the hash value in the distributed ledger DL1 of the storage unit 1b1. The control unit 1a1 chains the execution history of the acquisition transaction executed this time to an execution history of a previous transaction stored in the distributed ledger DL1 and executed last time via the hash value.

The control unit 1a3 calculates a hash value of an execution history of the acquisition transaction, and stores the execution history and the hash value in the distributed ledger DL3 of the storage unit 1b3. The control unit 1a3 chains the execution history of the acquisition transaction executed this time to an execution history of a previous transaction stored in the distributed ledger DL3 and executed last time via the hash value.

In this manner, in the communication apparatuses 1-1, 1-2, and 1-3, the distributed ledger management by block chain is performed in which the acquisition transaction for the metadata is verified and executed, and the execution histories are stored in the respective communication apparatuses.

[Step S5] The control unit 1a2 accepts disclosure policy setting from the apparatus e2.

[Step S6] When accepting the disclosure policy setting, the control unit 1a2 issues a setting transaction (set of a series of setting processes in response to the disclosure policy setting) for a disclosure policy, and transfers to the control units 1a1 and 1a3. Each of the control units 1a1, 1a2, and 1a3 verifies this setting transaction, and when validity is detected, executes the setting transaction.

The control unit 1a2 calculates a hash value of an execution history of the setting transaction, and stores the execution history and the hash value in the distributed ledger DL2 of the storage unit 1b2. The control unit 1a2 chains the execution history of the setting transaction executed this time to an execution history of a previous transaction stored in the distributed ledger DL2 and executed last time via the hash value.

Similarly, the control unit 1a1 calculates a hash value of an execution history of the setting transaction, and stores the execution history and the hash value in the distributed ledger DL1 of the storage unit 1b1. The control unit 1a1 chains the execution history of the setting transaction executed this time to an execution history of a previous transaction stored in the distributed ledger DL1 and executed last time via the hash value.

The control unit 1a3 calculates a hash value of an execution history of the setting transaction, and stores the execution history and the hash value in the distributed ledger DL3 of the storage unit 1b3. The control unit 1a3 chains the execution history of the setting transaction executed this time to an execution history of a previous transaction stored in the distributed ledger DL3 and executed last time via the hash value.

In this manner, in the communication apparatuses 1-1, 1-2, and 1-3, the distributed ledger management by block chain is performed in which the setting transaction for the disclosure policy is verified and executed, and the execution histories are stored in the respective communication apparatuses.

[Step S7] The control unit 1a3 accepts a reference request for metadata from the apparatus e3.

[Step S8] When accepting the reference request, the control unit 1a3 issues a reference transaction (set of a series of reference processes in response to the reference request), and transfers to the control units 1a2 and 1a3. Each of the control units 1a1, 1a2, and 1a3 verifies this reference transaction, and when validity is detected, executes an access transaction.

The control unit 1a3 calculates a hash value of an execution history of the reference transaction, and stores the execution history and the hash value in the distributed ledger DL3 of the storage unit 1b3. The control unit 1a3 chains the execution history of the reference transaction executed this time to an execution history of a previous transaction stored in the distributed ledger DL3 and executed last time via the hash value.

Similarly, the control unit 1a1 calculates a hash value of an execution history of the reference transaction, and stores the execution history and the hash value in the distributed ledger DL1 of the storage unit 1b1. The control unit 1a1 chains the execution history of the reference transaction executed this time to an execution history of a previous transaction stored in the distributed ledger DL1 and executed last time via the hash value.

The control unit 1a2 calculates a hash value of an execution history of the reference transaction, and stores the execution history and the hash value in the distributed ledger DL2 of the storage unit 1b2. The control unit 1a2 chains the execution history of the reference transaction executed this time to an execution history of a previous transaction stored in the distributed ledger DL2 and executed last time via the hash value.

In this manner, in the communication apparatuses 1-1, 1-2, and 1-3, the distributed ledger management by block chain is performed, in which the reference transaction is verified and executed, and the execution histories are stored in the respective communication apparatuses.

[Step S9] The control unit 1a3 accepts an access request for data from the apparatus e3.

[Step S10] When accepting the access request, the control unit 1a3 issues an access transaction (set of a series of access processes in response to the access request), and transfers to the control units 1a1 and 1a2. Each of the control units 1a1, 1a2, and 1a3 verifies this access transaction, and when validity is detected, executes the access transaction.

The control unit 1a3 calculates a hash value of an execution history of the access transaction, and stores the execution history and the hash value in the distributed ledger DL3 of the storage unit 1b3. The control unit 1a3 chains the execution history of the access transaction executed this time to an execution history of a previous transaction stored in the distributed ledger DL3 and executed last time via the hash value.

Similarly, the control unit 1a1 calculates a hash value of an execution history of the access transaction, and stores the execution history and the hash value in the distributed ledger DL1 of the storage unit 1b1. The control unit 1a1 chains the execution history of the access transaction executed this time to an execution history of a previous transaction stored in the distributed ledger DL1 and executed last time via the hash value.

The control unit 1a2 calculates a hash value of an execution history of the access transaction, and stores the execution history and the hash value in a distributed ledger DL2 of the storage unit 1b2. The control unit 1a2 chains the execution history of the access transaction executed this time to an execution history of a previous transaction stored in the distributed ledger DL2 and executed last time via the hash value.

In this manner, in the communication apparatuses 1-1, 1-2, and 1-3, the distributed ledger management by block chain is performed, in which the access transaction is verified and executed, and the execution histories are stored in the respective communication apparatuses.

[Step S11] The control unit 1a3 accesses data possessed in a data resource e11 of the apparatus e1.

As described above, according to the communication apparatus 1, the transaction, for making an apparatus different from an apparatus possessing data set a disclosure policy, is verified and executed based on the distributed ledger management by block chain. Accordingly, it is possible for the apparatus different from the apparatus possessing the data to set the disclosure policy while maintaining security.

For example, when personal data is distributed as service data, a disclosure policy may be set, while security is maintained, by a data owner of the personal data, not by an enterprise possessing the personal data.

### [Second Embodiment]

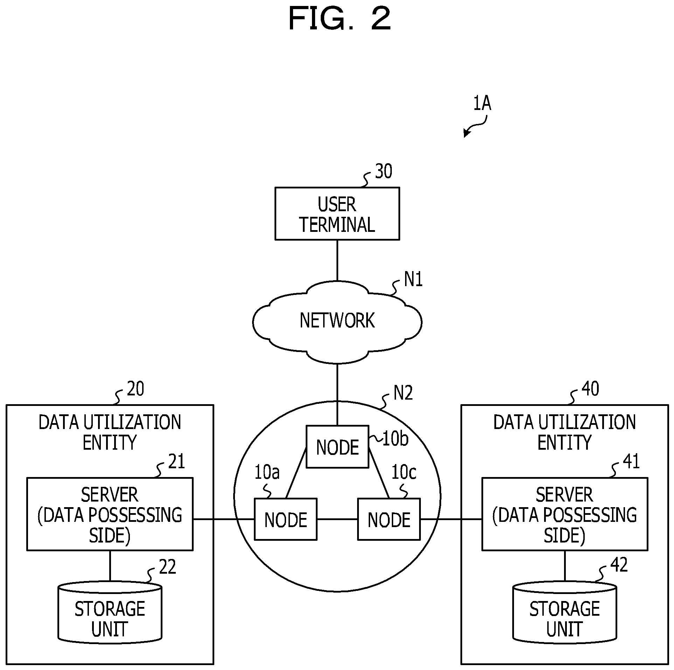

Next, a second embodiment will be described in a case where functions of the present disclosure are applied to a distributed data exchange platform. FIG. 2 is a diagram illustrating an example of a configuration of a distributed data exchange system. A distributed data exchange system 1A is a network system in which transactions of data that is distributed and managed at each site are performed, and includes networks N1, N2, a data possessing entity 20, a user terminal 30, and a data utilization entity 40. An entity is a main body of activities, such as an individual person or an enterprise.

The data possessing entity 20 includes a server 21 and a storage device 22. The data possessing entity 20 corresponds to, for example, an enterprise possessing data or the like. The data utilization entity 40 includes a server 41 and a storage device 42. The data utilization entity 40 corresponds to, for example, an enterprise that uses data or the like. The user terminal 30 is an entity of an individual person different from an enterprise.

The network N1 is, for example, the Internet. The network N2 includes nodes (or gateways) 10a, 10b, and 10c coupled with each other (referred to as nodes 10 when collectively referred). The nodes 10a, 10b, and 10c each have functions of the communication apparatus 1 illustrated in FIG. 1.

The node 10a is coupled with the server 21, the node 10b is coupled with the user terminal 30 via the network N1, and the node 10c is coupled with the server 41.

The nodes 10a, 10b, and 10c each have functions to perform data transfer and data storage with the distributed ledger management by block chain, and a platform for block chain is constructed in the network N2.

### <Hardware Configuration>

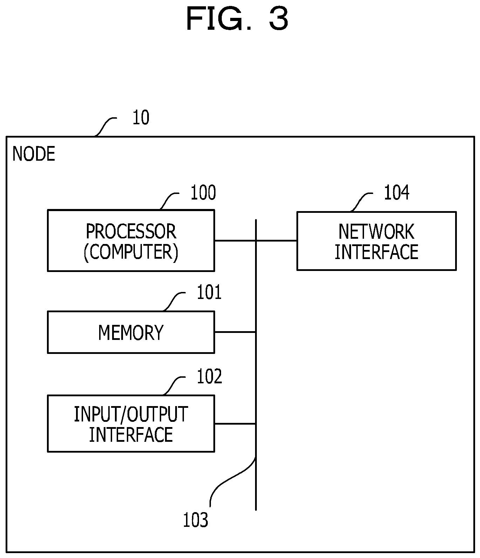

FIG. 3 is a diagram illustrating an example of a hardware configuration of a node. In the node 10, an entire apparatus is controlled by a processor (computer) 100.

A memory 101 and a plurality of peripheral devices are coupled with the processor 100 via a bus 103. The processor 100 may be a multiprocessor. The processor 100 is, for example, a central processing unit (CPU), a microprocessor unit (MPU), a digital signal processor (DSP), an application specific integrated circuit (ASIC), or a programmable logic device (PLD). The processor 100 may be a combination of two or more elements of the CPU, MPU, DSP, ASIC, and PLD.

The memory 101 is used as a main storage device of the node 10. At least some of programs of an operating system (OS) and application programs, that are executed by the processor 100, are temporarily stored in the memory 101. The memory 101 also stores various kinds of data required in processing by the processor 100.

The memory 101 is also used as an auxiliary storage device of the node 10, and stores the programs of the OS, the application programs, and the various kinds of data. The memory 101 may include, as the auxiliary storage device, a semiconductor storage device such as a flash memory or a solid state drive (SSD), or a magnetic recording medium such as a hard disk drive (HDD). The memory 101 has a storage area for a distributed ledger.

The peripheral devices coupled with the bus 103 include an input/output interface 102 and a network interface 104. The input/output interface 102 is coupled with a monitor (for example, a light emitting diode (LED), a liquid crystal display (LCD), or the like) that functions as a display device for displaying a state of the node 10 in accordance with an instruction from the processor 100.

The input/output interface 102 may be coupled with an information input device such as a keyboard or a mouse, and transmits a signal transmitted from the information input device to the processor 100.

The input/output interface 102 also functions as a communication interface for coupling the peripheral devices. For example, the input/output interface 102 may be coupled with an optical drive device that reads data recorded on an optical disk by using laser light or the like. Examples of the optical disk include a Blu-ray Disc (registered trademark), a compact disc read-only memory (CD-ROM), a CD-recordable (R)/rewritable (RW), and the like.

The input/output interface 102 may be also coupled with a memory device or a memory reader/writer. The memory device is a recording medium having a function of communicating with the input/output interface 102. The memory reader/writer is a device for writing data to a memory card or reading data from a memory card. A memory card is a card type recording medium.

The network interface 104 performs interface control over an adjacent node, an apparatus within an entity and other networks (such as the network N1), and may use, for example, a network interface card (NIC), a wireless local area network (LAN) card, or the like. Data received by the network interface 104 is outputted to the memory 101 and the processor 100.

With the hardware configuration described above, processing functions of the node 10 may be realized. For example, the node 10 may perform control according to the present disclosure by the processor 100 executing each of predetermined programs.

The node 10, for example, realizes the processing functions of the present disclosure by executing a program recorded in a computer-readable recording medium. A program, in which contents of processing to be executed by the node 10 are described, may be recorded in various recording media.

For example, programs to be executed by the node 10 may be stored in an auxiliary storage device. The processor 100 loads at least some of the programs in the auxiliary storage device to the main storage device and executes a program.

Recording may be performed in a portable recording medium such as an optical disk, a memory device, or a memory card. A program stored in the portable recording medium becomes executable after being installed in, for example, an auxiliary storage device, by control of the processor 100. The processor 100 may read and execute a program directly from the portable recording medium.

### <Functional Block>

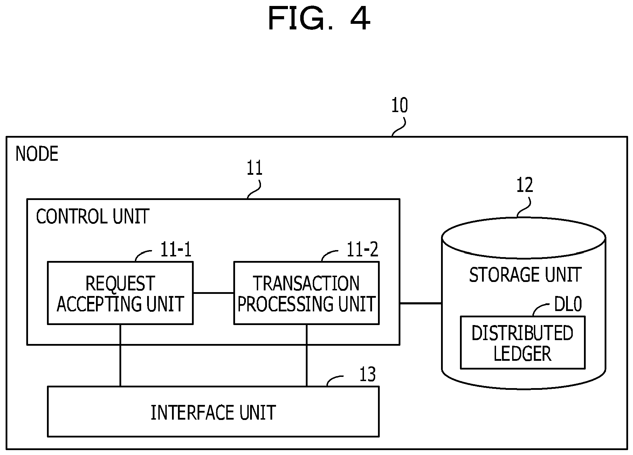

FIG. 4 is a diagram illustrating an example of functional blocks of the node. The node 10 includes a control unit 11, a storage unit 12, and an interface unit 13. The control unit 11 includes a request accepting unit 11-1 and a transaction processing unit 11-2.

The interface unit 13 performs interface control with an adjacent node, an apparatus in a coupled entity, and other networks. The request accepting unit 11-1 performs a request accepting process for a transaction from an entity. The transaction processing unit 11-2 transfers, verifies, and executes the accepted transaction, and stores an execution history.

The storage unit 12 has a storage area of a distributed ledger DL0, and stores an execution history of a transaction in the distributed ledger DL0. In this case, the storage unit 12 stores the execution history of the transaction chaining to an execution history stored immediately before via a hash value of the execution history. The storage unit 12 also stores information on operation control over an entirety of the node, service data, and the like.

The control unit 11 is realized by the processor 100 in FIG. 3, and the storage unit 12 is realized by the memory 101 in FIG. 3. The interface unit 13 is realized by the network interface 104 (or the input/output interface 102) in FIG. 3.

### <Overall Operation Sequence>

Hereinafter, operation of the present disclosure will be described in detail in a case where personal data is distributed in the distributed data exchange system 1A.

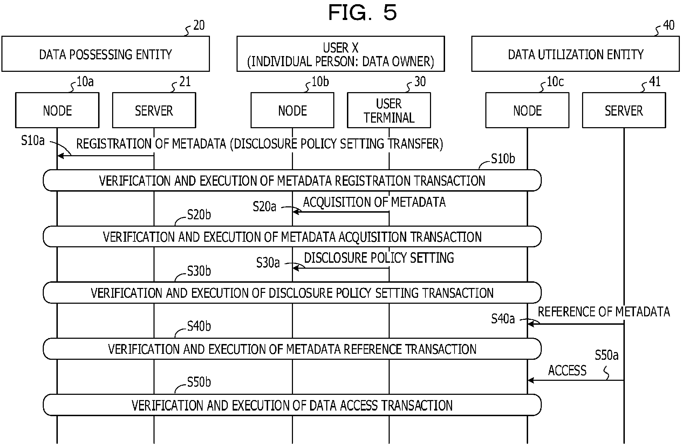

FIG. 5 is a diagram illustrating an overall operation sequence of personal data exchange. The personal data is data for an individual person different from industrial data, and includes various kinds of information relating to, for example, movement, behavior, purchase history, and the like of an individual person.

In FIG. 5, for example, it is assumed that the data possessing entity 20 informs the user X of a purpose of using personal data of an individual person (hereinafter, sometimes referred to as a "user X"), and obtains agreement of the user X, and possesses the personal data in advance.

[Step S10a] The server 21 transmits a registration request for metadata relating to the personal data possessed by the data possessing entity 20 (stored in the storage device 22) to the node 10a.

Here, when the server 21 registers metadata related to industrial data, the server 21 may set a disclosure policy for the industrial data, but when metadata related to personal data is registered, a disclosure policy for the personal data is not set, and setting authority of the disclosure policy is transferred. That is, an authorized person capable of setting the disclosure policy is set.

Specifically, the metadata related to the personal data includes a transfer attribute (the authorized person for setting the disclosure policy, and the disclosure policy) for transferring setting of the disclosure policy for the personal data to the user X who is an owner of the personal data (attribute information included in the metadata will be described later).

[Step S10b] Each of the nodes 10a, 10b, and 10c verifies a transaction for registering the metadata to a distributed ledger, and when validity of an entity registering the metadata is successfully confirmed, executes the metadata registration transaction, and stores an execution history in the distributed ledger thereof.

[Step S20a] The user terminal 30 transmits an acquisition request for metadata to the node 10b.

[Step S20b] Each of the nodes 10a, 10b, and 10c verifies a transaction for the user terminal 30 to acquire the metadata, and when validity of an entity acquiring the metadata is successfully confirmed, executes the metadata acquisition transaction, and stores an execution history in the distributed ledger thereof. The node 10b provides the metadata to the user terminal 30.

[Step S30a] The user terminal 30 sets a disclosure policy for the acquired metadata, and transmits to the node 10b.

[Step S30b] Each of the nodes 10a, 10b, and 10c verifies a transaction for setting the disclosure policy for the metadata, and when validity of an entity setting the disclosure policy is successfully confirmed, executes the disclosure policy setting transaction, and stores an execution history in the distributed ledger thereof.

[Step S40a] The server 41 transmits a reference request for metadata to the node 10c.

[Step S40b] Each of the nodes 10a, 10b, and 10c verifies a transaction for the server 41 to refer the metadata, and when validity of an entity referring the metadata is successfully confirmed, executes the metadata reference transaction, and stores an execution history in the distributed ledger thereof. The node 10c makes the server 41 refer to the metadata.

[Step S50a] The server 41 accesses personal data through the node 10c.

[Step S50b] Each of the nodes 10a, 10b, and 10c verifies a transaction for the server 41 to access the personal data, and when validity of an entity accessing the data is successfully confirmed, executes the data access transaction, and stores an execution history in the distributed ledger thereof. The node 10c accesses personal data managed by the data possessing entity 20.

### <Configuration of Metadata of Personal Data>

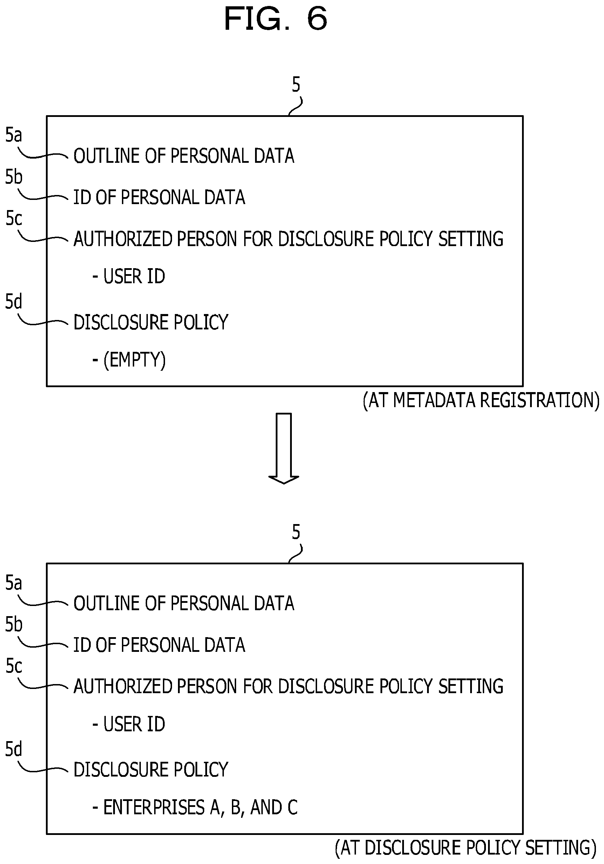

FIG. 6 is a diagram illustrating an example of a configuration of metadata of personal data. Metadata 5 includes, as attributes, an outline 5a of the personal data, an ID 5b of the personal data, an authorized person for disclosure policy setting 5c, and a disclosure policy 5d.

The metadata 5 at the time of metadata registration is an attribute when the metadata is registered by the data possessing entity 20, and the metadata 5 at the time of disclosure policy setting is an attribute when a disclosure policy is set by the user terminal 30.

Here, a transfer attribute includes the authorized person for disclosure policy setting 5c, and the disclosure policy 5d. The authorized person for disclosure policy setting 5c is information (a user ID) of an authorized person capable of setting a disclosure policy for personal data. In the example described above, the user X is the authorized person, and thus, for example, as a user ID, an ID of the user terminal 30 is registered.

The disclosure policy 5d is information indicating a disclosure destination of personal data. The disclosure policy 5d is empty (nothing is set) at the time of metadata registration (initial state) in step S10a described above. At the time of disclosure policy setting in step S30a, disclosure destinations (enterprises A, B, C, and the like) are registered in the disclosure policy 5d from the user terminal 30. In the example illustrated in FIG. 2, (an ID of) an enterprise that is the data utilization entity 40 is registered.

### <Transaction Information>

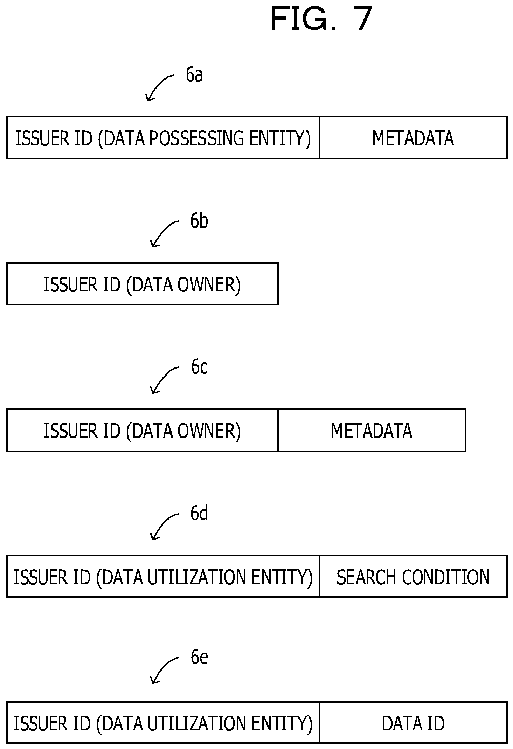

FIG. 7 is a diagram illustrating an example of transaction information. The transaction information is information that is issued at a node when an entity coupled with the network N2 accesses a platform for block chain of the network N2.

Transaction information 6a at the time of metadata registration includes an issuer ID and metadata. This issuer ID corresponds to an ID of the data possessing entity 20.

Transaction information 6b at the time of metadata acquisition includes an issuer ID. This issuer ID corresponds to an ID of a data owner (the user X). By notifying the node 10b of the issuer ID from the user terminal 30, metadata in which the ID of the user X is registered is extracted from a distributed ledger managed by the node 10b, and the user X may acquire this metadata.

Transaction information 6c at the time of disclosure policy setting includes an issuer ID and metadata. This issuer ID corresponds to an ID of a data owner (the user X). A disclosure policy is set in the metadata of the transaction information 6c.

Transaction information 6d at the time of metadata reference includes an issuer ID and a search condition. This issuer ID corresponds to an ID of the data utilization entity 40. The search condition is key information for searching metadata, and when an outline of the metadata matches the key information of the search condition, the desired metadata may be referenced.

Transaction information 6e at the time of data access includes an issuer ID and a data ID. This issuer ID corresponds to an ID of the data utilization entity 40. The data ID is an ID of a personal data body, and by the node 10c transmitting the transaction information 6e in which the data ID is set to the node 10a, it is possible to access personal data corresponding to the data ID.

### <Verification and Execution of Transactions>

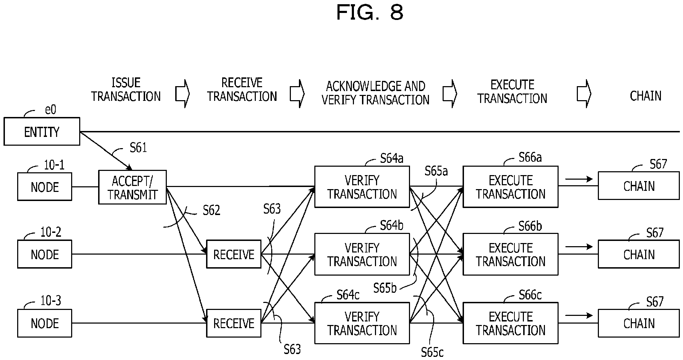

FIG. 8 is a diagram illustrating an example of verification and execution of transactions. In the figure, an entity e0 is coupled with a node 10-1, and the node 10-1, 10-2, and 10-3 are coupled with each other. The entity e0 is, for example, a server or a user terminal.

[Step S61] The entity e0 issues a transaction, and transmits transaction information to the node 10-1 coupled with the entity e0.

[Step S62] When receiving the transaction information and accepting the transaction, the node 10-1 transmits the transaction information to the nodes 10-2 and 10-3.

[Step S63] The nodes 10-2 and 10-3 receive the transaction information. The node 10-2 notifies the nodes 10-1 and 10-3 of a reception result of the transaction information, and the node 10-3 notifies the nodes 10-1 and 10-2 of a reception result of the transaction information.

[Step S64a] After recognizing successful reception based on the respective reception results of the transaction information from the nodes 10-2 and 10-3, the node 10-1 verifies validity of the transaction.

[Step S64b] After recognizing successful reception based on the reception result of the transaction information in the node 10-3, the node 10-2 verifies validity of the transaction.

[Step S64c] After recognizing successful reception based on the reception result of the transaction information in the node 10-2, the node 10-3 verifies validity of the transaction.

[Step S65a] The node 10-1 transmits a verification result of the transaction to the nodes 10-2 and 10-3.

[Step S65b] The node 10-2 transmits a verification result of the transaction to the nodes 10-1 and 10-3.

[Step S65c] The node 10-3 transmits a verification result of the transaction to the nodes 10-1 and 10-2.

[Step S66a] The node 10-1 receives the respective verification results transmitted from the nodes 10-2 and 10-3, and when the validity is detected at each of the nodes, executes the transaction.

[Step S66b] The node 10-2 receives the respective verification results transmitted from the nodes 10-1 and 10-3, and when the validity is detected at each of the nodes, executes the transaction.

[Step S66c] The node 10-3 receives the respective verification results transmitted from the nodes 10-1 and 10-2, and when the validity is detected at each of the nodes, executes the transaction.

[Step S67] Each of the nodes 10-1, 10-2, and 10-3 chains a history of the executed transaction, and stores. For example, the node 10-1 hashes a history of a latest transaction that is executed, obtains a hash value, and couples with a history of a previous transaction executed last time via the hash value, and stores. Each of the nodes 10-2 and 10-3 performs a similar coupling process.

Since such processing is performed at each node, each node may verify validity of a transaction without a specific manager. Since each node stores the history of the executed transaction by the above-described chaining, it is possible to suppress the histories from being tampered with.

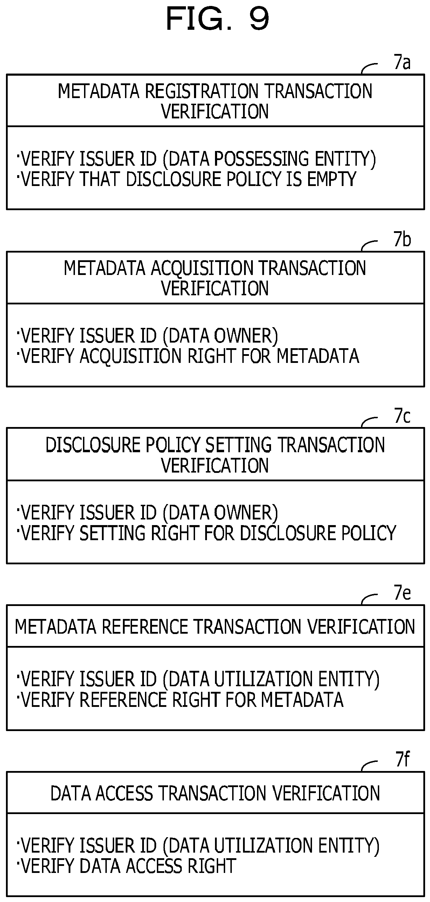

FIG. 9 is a diagram illustrating an example of verification contents in each transaction. In metadata registration transaction verification 7a, verification of an issuer ID (data possessing entity) and verification of whether or not a disclosure policy is empty are performed.

In metadata acquisition transaction verification 7b, verification of an issuer ID (a data owner (the user X)) and verification of whether or not an entity has an acquisition right for metadata are performed. In disclosure policy setting transaction verification 7c, verification of an issuer ID (a data owner (the user X)) and verification of whether or not an entity has a setting right for a disclosure policy are performed.

In metadata reference transaction verification 7e, verification of an issuer ID (a data utilization entity) and verification of whether or not an entity has a reference right for metadata are performed. In data access transaction verification 7f, verification of an issuer ID (a data utilization entity) and verification of whether or not an entity has an access right for data are performed.

### <Operation Sequence>

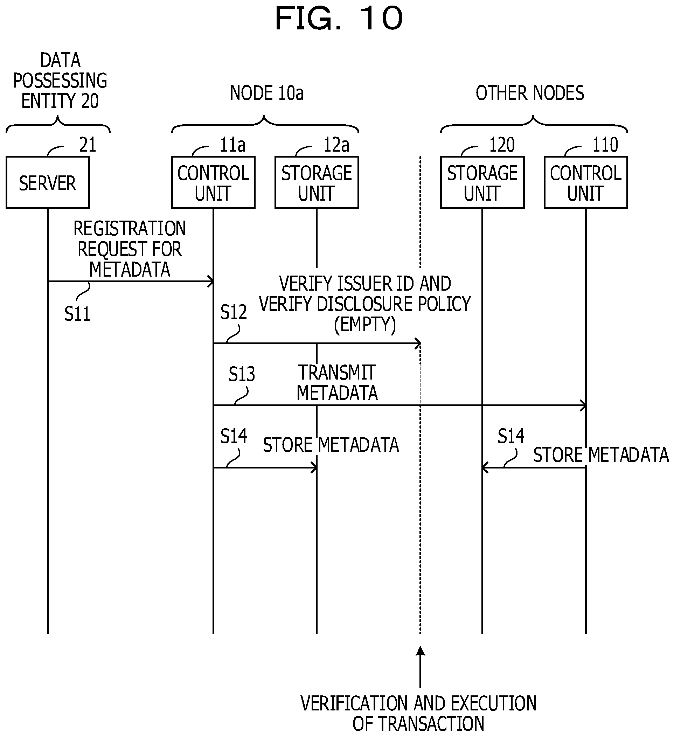

Next, an operation sequence in each transaction will be described with reference to FIG. 10 to FIG. 14. At a dotted line section in a sequence diagram illustrated below, processing such as the verification and execution of the transaction illustrated in FIG. 8 is performed.

FIG. 10 is a diagram illustrating an example of an operation sequence in metadata registration. FIG. 10 is a detailed sequence for steps S10a and SlOb illustrated in FIG. 5.

[Step S11] The server 21 of the data possessing entity 20 requests the control unit 11a of the node 10a to register metadata.

[Step S12] As a verification process for a transaction in response to the metadata registration request, the control unit 11a verifies an issuer ID and verifies a disclosure policy (empty).

[Step S13] The control unit 11a transmits the metadata to a control unit 110 of another node.

[Step S14] The control unit 11a makes a storage unit 12a of the node 10a store the metadata, and the control unit 110 makes a storage unit 120 of the other node store the metadata.

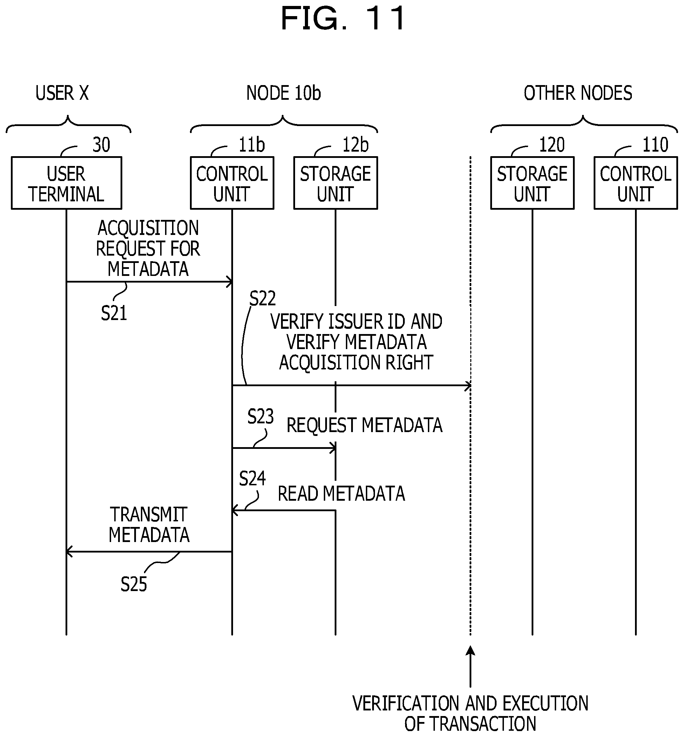

FIG. 11 is a diagram illustrating an example of an operation sequence in metadata acquisition. FIG. 11 is a detailed sequence for steps S20a and S20b illustrated in FIG. 5.

[Step S21] The user terminal 30 requests a control unit 11b of the node 10b to acquire metadata.

[Step S22] As a verification process for a transaction in response to the metadata acquisition request, the control unit 11b verifies an issuer ID and verifies an acquisition right for the metadata.

[Step S23] The control unit 11b requests metadata from a storage unit 12b.

[Step S24] The control unit 11b reads out the metadata from the storage unit 12b.

[Step S25] The control unit 11b transmits the read metadata to the user terminal 30.

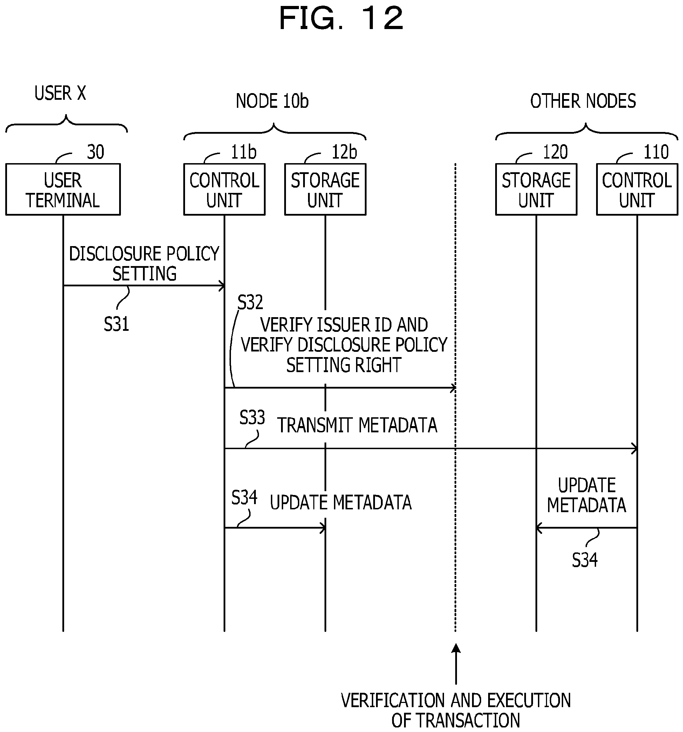

FIG. 12 is a diagram illustrating an example of an operation sequence in disclosure policy setting. FIG. 12 is a detailed sequence for steps S30a and S30b illustrated in FIG. 5.

[Step S31] The user terminal 30 performs disclosure policy setting for metadata, for the control unit 11b of the node 10b.

[Step S32] As a transaction verification process in response to the disclosure policy setting, the control unit 11b verifies an issuer ID and verifies a disclosure policy setting right.

[Step S33] The control unit 11b transmits metadata for which the disclosure policy is set to the control unit 110 of the other node.

[Step S34] The control unit 11b updates metadata stored in the storage unit 12b of the node 10b, and the control unit 110 updates metadata stored in the storage unit 120.

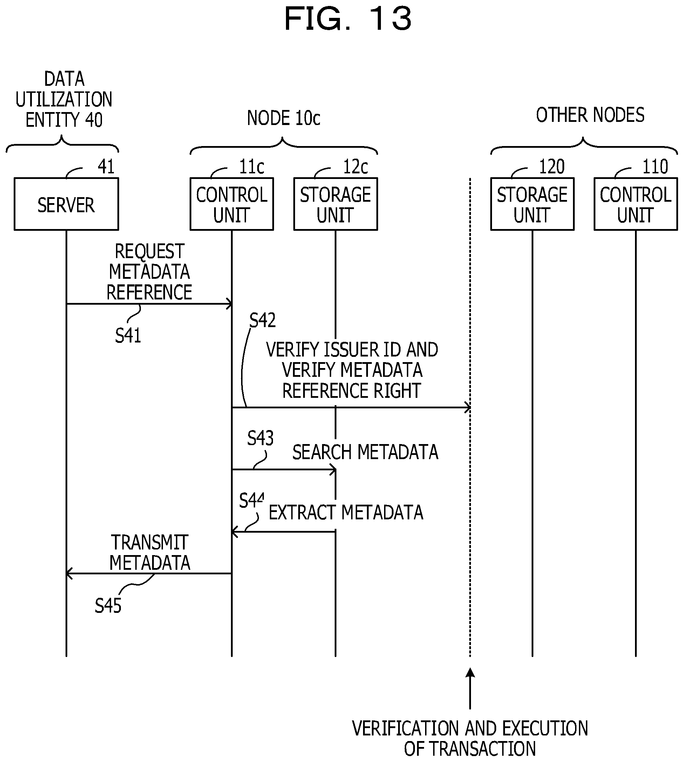

FIG. 13 is a diagram illustrating an example of an operation sequence in metadata reference. FIG. 13 is a detailed sequence for steps S40a and S40b illustrated in FIG. 5.

[Step S41] The server 41 of the data utilization entity 40 requests a control unit 11c of the node 10c to refer metadata.

[Step S42] As a transaction verification process in response to the metadata reference request, the control unit 11c verifies an issuer ID and verifies a metadata reference right.

[Step S43] The control unit 11c searches metadata from a storage unit 12c.

[Step S44] The control unit 11c extracts metadata that matches key information from the storage unit 12c.

[Step S45] The control unit 11c transmits the extracted metadata to the server 41.

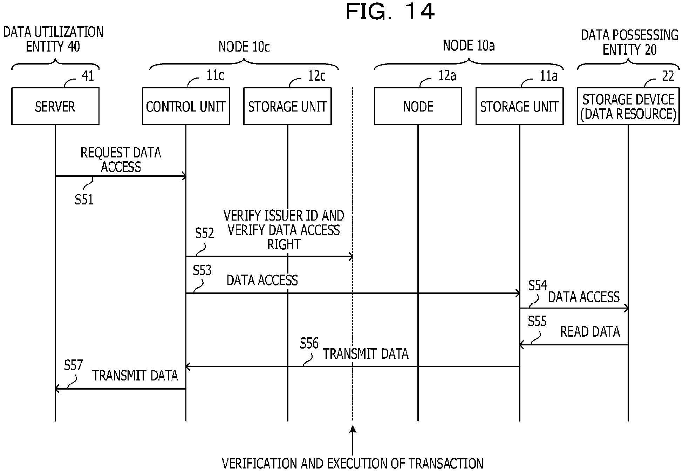

FIG. 14 is a diagram illustrating an example of an operation sequence in data access. FIG. 14 is a detailed sequence for steps S50a and S50b illustrated in FIG. 5.

[Step S51] The server 41 of the data utilization entity 40 requests the control unit 11c of the node 10c to access data (personal data access).

[Step S52] As a transaction verification process in response to the data access request, the control unit 11c verifies an issuer ID and verifies a data access right.

[Step S53] The control unit 11c performs data access to the control unit 11a of the node 10a.

[Step S54] The control unit 11a performs data access to the storage device 22, that is a data resource of the data possessing entity 20.

[Step S55] The control unit 11a reads out data from the storage device 22.

[Step S56] The control unit 11a transmits the data to the control unit 11c.

[Step S57] The control unit 11c transmits the received data to the server 41.

In the above description, the disclosure policy for the personal data is set, but it is also possible to set a disclosure policy for an application programming interface (API) for personal data.

That is, control may be performed such that the node 10a accepts a transfer attribute for transferring disclosure policy setting relating to an API for personal data from the server 21 to the user terminal 30, the node 10b accepts API settings as a disclosure policy from the user terminal 30, and the node 10c accesses the personal data relaying an access from the server 41, based on the disclosure policy for the API set by the user terminal 30.

The above-described processing functions of the communication apparatus 1 and the node 10 according to the present disclosure may be realized by a computer. In this case, a program that describes processing contents of functions to be included in the communication apparatus 1 and the node 10 is provided. The above processing function is realized on the computer by executing the program on the computer.

The program in which the content of processing is written may be recorded on a computer-readable recording medium. Examples of the computer-readable recording medium include a magnetic storage device, an optical disk, a magneto-optical recording medium, a semiconductor memory, and the like. Examples of the magnetic storage device include a hard disk device (HDD), a floppy disk (FD), a magnetic tape, and the like. Examples of the optical disk include a DVD, a DVD-RAM, a CD-ROM/RW, and the like. One example of the magneto-optical recording medium is a magneto-optical (MO) disk.

When a program is to be distributed, for example, portable recording media, such as a DVD and a CD-ROM, on which the program is recorded are sold. Alternatively, the program may be stored in the storage device of a server computer, and the program may be transferred from the server computer to another computer via a network.

The computer executing the program stores, for example, the program recorded on the portable recording medium or the program transferred from the server computer in the own storage device. The computer then reads the program from the storage device thereof and executes processing according to the program. The computer may also read the program directly from the portable storage medium and execute processing in accordance with the program.

Every time the program is transferred from a server computer coupled through a network, the computer may responsively execute processing according to the received program. At least part of the above-described processing functions may be achieved by an electronic circuit such as a DSP, an ASIC, or a PLD.

Although the embodiments have been described, the configurations of the units described in the embodiments are able to be replaced with other units having the same functions. Any other constituents or processes may be added. Any two or more configurations (features) of the aforementioned embodiments may be combined.

### CITATION LIST

### [PATENT LITERATURE]

[PTL 1] International Publication Pamphlet No. WO 2017/038507
[PTL 2] Japanese Laid-open Patent Publication No. 2018-98564

### REFERENCE SIGNS LIST

- 1, 1-1, 1-2, 1-3: COMMUNICATION APPARATUSES
- 1a, 1a1, 1a2, 1a3: CONTROL UNITS
- 1b, 1b1, 1b2, 1b3: STORAGE UNITS
- DL1, DL2, DL3: DISTRIBUTED LEDGERS
- N0: NETWORK
- e1, e2, e3: APPARATUSES
- e11: DATA RESOURCE

## Claims

1. A communication method by a plurality of communication apparatuses included in a network, wherein
processing is performed in which
a first communication apparatus coupled with a first apparatus possessing data, when accepting metadata including attribute information of the data from the first apparatus, accepts a registration request for the metadata including a transfer attribute for transferring setting authority for a disclosure policy for the data to a second apparatus,
a second communication apparatus coupled with the second apparatus, accepts an acquisition request for the registered metadata from the second apparatus, and accepts the disclosure policy setting for the metadata acquired by the second apparatus,
a third communication apparatus coupled with a third apparatus that uses the data, accesses the data in a case where the third apparatus is set in the disclosure policy when an access request for the data is accepted from the third apparatus, and
the first, second, third communication apparatuses cooperate to verify validity of, execute, and share a history of a registration transaction that is a series of registration processes in response to the registration request, an acquisition transaction that is a series of acquisition processes in response to the acquisition request, a setting transaction that is a series of setting processes in response to the disclosure policy setting, and an access transaction that is a series of access processes in response to the access request.

2. A communication program executed by a plurality of communication apparatuses included in a network, wherein
a first computer of a first communication apparatus coupled with a first apparatus possessing data, when accepting metadata including attribute information of the data from the first apparatus, performs processing for accepting a registration request for the metadata including a transfer attribute for transferring setting authority for a disclosure policy for the data to a second apparatus,
a second computer of the second communication apparatus coupled with the second apparatus performs processing for accepting an acquisition request for the registered metadata from the second apparatus, and accepting the disclosure policy setting for the metadata acquired by the second apparatus,
a third computer of a third communication apparatus coupled with a third apparatus that uses the data performs processing for accessing the data in a case where the third apparatus is set in the disclosure policy when an access request for the data is accepted from the third apparatus, and
the first, second, and third computers cooperate and the first, second, and third computers verify validity of, execute, and share a history of a registration transaction that is a series of registration processes in response to the registration request, an acquisition transaction that is a series of acquisition processes in response to the acquisition request, a setting transaction that is a series of setting processes in response to the disclosure policy setting, and an access transaction that is a series of access processes in response to the access requests.

3. The communication program according to claim 2, wherein
processing is performed in which
when the first computer accepts the registration request for the metadata including the transfer attribute, the first, second, and third computers verify the registration transaction, and
when the first, second, and third computers detect validity of the registration transaction, the first computer executes the registration transaction, and an execution history of the registration transaction is shared by a distributed ledger included in the first, second, and third communication apparatuses.

4. The communication program according to claim 3, wherein
verification of the registration transaction includes verification of identification information of the first apparatus that requests registration, and verification that a setting field of the disclosure policy within the transfer attribute is in an empty state.

5. The communication program according to claim 2, wherein
processing is performed in which
when the second computer accepts the acquisition request for the metadata, the first, second, and third computers verify the acquisition transaction, and
when the first, second, and third computers detect validity of the acquisition transaction, the second computer executes the acquisition transaction, and an execution history of the acquisition transaction is shared by a distributed ledger included in the first, second, and third communication apparatuses.

6. The communication program according to claim 5, wherein
verification of the acquisition transaction includes verification of identification information of the second apparatus that requests to acquire the metadata, and verification of an acquisition right for the metadata.

7. The communication program according to claim 2, wherein
processing is performed in which
when the second computer accepts the disclosure policy setting, the first, second, and third computers verify the setting transaction, and
when the first, second, and third computers detect validity of the setting transaction, the second computer executes the setting transaction, and an execution history of the setting transaction is shared by a distributed ledger included in the first, second, and third communication apparatuses.

8. The communication program according to claim 7, wherein
verification of the setting transaction includes verification of identification information of the second apparatus that sets the disclosure policy, and verification of an authorized person for the disclosure policy setting.

9. The communication program according to claim 2, wherein processing is performed in which
when the third computer accepts the access request for the data, the first, second, and third computers verify the access transaction, and
when the first, second, and third computers detect validity of the access transaction, the third computer executes the access transaction, and an execution history of the access transaction is shared by a distributed ledger included in the first, second, and third communication apparatuses.

10. The communication program according to claim 9, wherein
verification of the access transaction includes verification of identification information of the third apparatus that requests to access the data, and verification of an access right for the data.

11. The communication program according to claim 2, wherein processing is performed in which
the first computer accepts the transfer attributes for transferring a setting authority for the disclosure policy relating to an application programming interface (API) for the data from the first apparatus to the second apparatus,
the second computer accepts setting of the API as the disclosure policy from the second apparatus, and
the third computer makes the third apparatus access the data, based on the disclosure policy for the API set by the second apparatus.

12. A communication apparatus included in a network, comprising:
a control unit coupled with another apparatus via the network and performing communication control; and
a storage unit having a storage area of a distributed ledger, wherein
the control unit,
when coupled with a first apparatus possessing data, and accepting metadata including attribute information of the data from the first apparatus, accepts a registration request for the metadata including a transfer attribute for transferring setting authority for a disclosure policy for the data to a second apparatus,
when coupled with a second communication apparatus, accepts an acquisition request for the metadata that is registered from the second apparatus, and accepts the disclosure policy setting for the metadata acquired by the second apparatus,
when coupled with a third communication apparatus that uses the data, accesses the data in a case where the third apparatus is set in the disclosure policy when an access request for the data is accepted from the third apparatus,
and
a registration transaction that is a series of registration processes in response to the registration request, an acquisition transaction that is a series of acquisition processes in response to the acquisition request, a setting transaction that is a series of setting processes in response to the disclosure policy setting, and an access request transaction that is a series of access processes in response to the access request are verified and executed, and a history is stored in the distributed ledger.
